# EUROPEAN PATENT APPLICATION

(11) **EP 4 841 651 A1**
(43) Date of publication of application: **18.11.2026**
(21) Application number: 24921422.2
(22) Date of filing: 06.09.2024
(51) Int. Cl.: G21C 13/024

(54) **REACTOR HEAD STRUCTURE AND HEAD SYSTEM**

(30) Priority: 30.01.2024 CN 202410137469
(71) Applicant: China Nuclear Power Design Company Ltd. (Shenzhen), Shenzhen, Guangdong 518100 (CN); China Nuclear Power Engineering Co., Ltd., Shenzhen, Guangdong 518124 (CN)
(72) Inventor: MO, Shaojia, Shenzhen, Guangdong 518124 (CN); RAN, Xiaobing, Shenzhen, Guangdong 518124 (CN); CHEN, Yongchao, Shenzhen, Guangdong 518124 (CN); FANG, Jian, Shenzhen, Guangdong 518124 (CN); LI, Yuezhong, Shenzhen, Guangdong 518124 (CN); LIU, Yanwu, Shenzhen, Guangdong 518124 (CN); CHEN, Zhenwei, Shenzhen, Guangdong 518124 (CN); PI, Jianhong, Shenzhen, Guangdong 518124 (CN); WEI, Xingfang, Shenzhen, Guangdong 518124 (CN)
(74) Representative: Westphal, Mussgnug & Partner, Patentanwälte mbB
(86) International application number: PCT/CN2024/117608
(87) International publication number: WO 2025/161397

(57) **Abstract**

A reactor head structure and a reactor head system, the reactor head structure (1) comprising a seismic support ring (30) and a seismic plate (40), wherein the seismic plate (40) is mounted in the seismic support ring (30). The reactor head structure further comprises a bracket (10), and a flow baffle (50) for dispersing high-temperature air at the center of a reactor head, wherein the bracket (10) comprises a plurality of support rods (11) arranged at intervals, and one end of each of the support rods (11) is fixed to the seismic support ring (30); and the flow baffle (50) is arranged on the seismic plate (40). The reactor head structure (1) has a simple structure and satisfies an overall seismic strength, facilitates integrated hoisting, allows for convenient maintenance, and is light in terms of weight. Moreover, cooling is realized by means of the natural circulation of air, thereby preventing unplanned emergency reactor shutdown due to burnout of cables.

## Description

### Technical Field

The present application relates to the technical field of reactors, and in particular to a reactor head structure and a reactor head system.

### Background Art

In a nuclear power plant, a reactor head assembly is one of the important components of a reactor system and is installed above a reactor pressure vessel head. During normal operation, the reactor head assembly is fixed to the reactor pressure vessel head. During reactor shutdown for refueling, the reactor head assembly is lifted and subsequently lowered back into position together with the reactor pressure vessel head and a control rod drive mechanism. However, since a high-temperature heat source is present inside the control rod drive mechanism, a high-temperature airflow generated thereby makes it difficult for heat inside the reactor head to be dissipated, resulting in an excessively high local ambient temperature around components, such as cables, within the reactor head, and consequently giving rise to a risk that such components may be burnt out and cause an emergency unplanned reactor shutdown.

To address the above problem, existing reactor head structures are provided with corresponding forced ventilation cooling devices. However, such a device occupies a large amount of space within the reactor head, thereby making the reactor head structure relatively complicated and increasing the difficulty of arranging the reactor head structure and routing cables, as well as operation and maintenance costs. Moreover, the reactor head structure becomes excessively dependent on the device. Once the device fails to operate normally, there is again a potential risk of an emergency unplanned reactor shutdown.

At present, existing reactor head structures are generally classified into distributed reactor head structures and integrated reactor head structures. In order to provide seismic support for the control rod drive mechanism, a distributed reactor head structure is provided with a seismic support assembly. Since the reactor head structure is of a distributed type, the seismic support assembly thereof needs to be connected and fixed by a plurality of seismic tie rods. However, due to the individually distributed arrangement of the seismic tie rods, each lifting and lowering operation thereof occupies time on the critical path of a refueling outage, such that integral lifting of the reactor head structure cannot be achieved, while the radiation dose received by operators is also increased. An integrated reactor head structure, on the other hand, is generally of a cylindrical configuration. Such a structural arrangement significantly increases the weight of the reactor head. Furthermore, since corresponding seismic tie rods are not provided, seismic design becomes more difficult. The surrounding cylindrical reactor head structure encloses therein equipment such as the control rod drive mechanism, pipes of the forced ventilation cooling device, instruments, and instrument sockets, thereby significantly increasing the difficulty of in-service inspection, maintenance, and replacement.

### Summary

The technical problem to be solved by the present application is to provide a reactor head structure and a reactor head system.

The present application adopts the following technical solutions:
a reactor head structure is provided, comprising a seismic support ring and a seismic plate, wherein the seismic plate is mounted within the seismic support ring, and further comprising:
a support assembly comprising a plurality of spaced-apart support rods, one end of each of the support rods being fixed to the seismic support ring; and
a flow-guiding baffle configured to disperse high-temperature air at a central portion of the reactor head, the flow-guiding baffle being disposed on the seismic plate.

In some embodiments, the support assembly further comprises a plurality of connecting members, two ends of each of the connecting members being respectively fixed to any two adjacent support rods.

In some embodiments, the connecting members comprise a plurality of horizontally arranged first connecting members and a plurality of obliquely arranged second connecting members, the support rods are each vertically arranged, a plurality of the first connecting members and a plurality of the second connecting members are spaced apart between any two adjacent support rods, and the first connecting members and the second connecting members between any two adjacent support rods are arranged in a crossed manner.

In some embodiments, the support rods are uniformly spaced apart along a circumferential direction of the seismic support ring, the first connecting members and the second connecting members are each rod-shaped, and each adjacent first connecting member and second connecting member, together with the support rod, define a right triangle.

In some embodiments, the reactor head structure further comprises a base, and the other end of each of the support rods is fixed to the base.

In some embodiments, the base comprises a base body, the base body being in the form of a flange ring, and an upper end portion and a lower end portion thereof each projecting radially outward along a circumferential direction.

In some embodiments, the flow-guiding baffle is arranged coaxially with the seismic plate.

In some embodiments, a distance between the flow-guiding baffle and the seismic plate is 0-400 mm.

In some embodiments, a side length or diameter of the flow-guiding baffle is 200-2000 mm.

In some embodiments, a plurality of clearance openings for accommodating control rod drive mechanisms are formed in the flow-guiding baffle.

In some embodiments, the flow-guiding baffle is formed by joining at least two base plate segments, at least one clearance recess being formed at an edge of each of the base plate segments, and two corresponding clearance recesses being joined to form one of the clearance openings.

In some embodiments, the reactor head structure further comprises a cable support and cable bridge assembly and an upper lifting device, the cable support and cable bridge assembly being mounted above the flow-guiding baffle, and the upper lifting device being connected to the cable support and cable bridge assembly.

A reactor head system is further provided, which is disposed on a reactor pressure vessel head and comprises the reactor head structure according to any one of the foregoing embodiments and a control rod drive mechanism.

In some embodiments, the other end of each of the support rods is connected to the reactor pressure vessel head, and the control rod drive mechanism extends through the reactor head structure.

In some embodiments, the reactor head structure further comprises a base, the other end of each of the support rods being fixed to the base, and the base being mounted on the reactor pressure vessel head by means of at least one support member.

In some embodiments, the control rod drive mechanism and at least some of the cables routed in the reactor head system are made of high-temperature-resistant materials.

Implementation of the present application provides at least the following technical effects:
in the reactor head structure provided by the present application, the provision of the support assembly enables integral lifting. Seismic tie rods that would occupy time on the critical path of a refueling outage are not required, while a closed annular structure that would make inspection, maintenance, and replacement difficult is also avoided. Accordingly, while satisfying overall seismic strength requirements, the reactor head structure has a simple structure, facilitates integral lifting, inspection, and maintenance, and has a relatively low weight.

By providing the flow-guiding baffle, the present application eliminates the need for a forced ventilation cooling device in the reactor head structure, thereby reducing spatial arrangement constraints within the reactor head and reducing the difficulty of cable routing as well as operation and maintenance costs. Cooling can be achieved by natural circulation of air, thereby preventing cables from being burnt out and consequently avoiding an emergency unplanned reactor shutdown.

### Brief Description of the Drawings

In order to more clearly illustrate the technical solutions of the present application, the present application will be further described below with reference to the accompanying drawings and embodiments. It should be understood that the following drawings merely illustrate certain embodiments of the present application and therefore should not be construed as limiting the scope thereof. A person of ordinary skill in the art may obtain other related drawings based on these drawings without making any inventive effort. In the drawings:
FIG. 1 is a schematic perspective structural view of a reactor head system according to an embodiment of the present application;
FIG. 2 is a schematic view showing an assembled structure of the seismic support ring, the seismic plate, and the flow-guiding baffle in the reactor head system shown in FIG. 1; and
FIG. 3 is a schematic partial structural view of the control rod drive mechanism and the rod control and rod position system in the reactor head system shown in FIG. 1.

### Detailed Description of the Embodiments

In order to provide a clearer understanding of the technical features, objects, and effects of the present application, specific embodiments of the present application will be described in detail below with reference to the accompanying drawings. In the following description, it should be understood that terms indicating orientations or positional relationships, such as "front", "rear", "upper", "lower", "left", "right", "vertical", "horizontal", "bottom", "inner", "inside", and "outer", refer to orientations or positional relationships based on those shown in some of the accompanying drawings and are used for construction and operation in particular orientations merely for convenience in describing the technical solutions, rather than indicating that the devices or elements referred to must have particular orientations. Accordingly, such terms should not be construed as limiting the present application.

It should also be noted that, unless otherwise expressly specified and defined, terms such as "mounted", "coupled", "connected", "fixed", and "disposed" should be construed broadly. For example, a connection may be a fixed connection, a detachable connection, or an integral connection; may be a mechanical connection or an electrical connection; may be a direct connection or an indirect connection through an intermediate medium; and may refer to internal communication between two elements or an interaction relationship between two elements. When an element is referred to as being "on" or "under" another element, the element may be positioned "directly" or "indirectly" on or under the other element, or one or more intervening elements may be present. Terms such as "first" and "second" are used merely for convenience in describing the technical solutions and should not be construed as indicating or implying relative importance or implicitly specifying the number of the technical features indicated thereby. Accordingly, a feature defined by "first", "second", or the like may explicitly or implicitly include one or more such features. A person of ordinary skill in the art may understand the specific meanings of the foregoing terms in the present application according to specific circumstances.

In the following description, specific details, such as particular system structures and technologies, are set forth for purposes of illustration rather than limitation, so as to provide a thorough understanding of the embodiments of the present application. However, it should be apparent to a person skilled in the art that the present application may also be implemented in other embodiments without these specific details. In other instances, detailed descriptions of well-known systems, devices, circuits, and methods are omitted so as to avoid obscuring the description of the present application with unnecessary details.

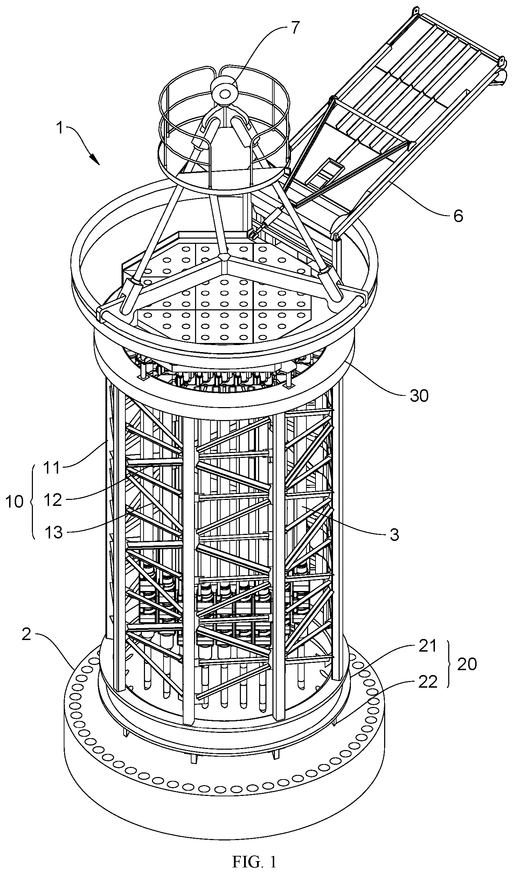

FIG. 1 illustrates a reactor head structure 1 according to an embodiment of the present application. The reactor head structure 1 is configured to provide seismic support for a control rod drive mechanism 3, so as to limit excessive deformation of the CRDM under seismic conditions, thereby maintaining normal operation thereof and ensuring functional integrity thereof under accident conditions. The reactor head structure 1 is further configured to provide a cooling and ventilation passage for magnetic yoke coils of the control rod drive mechanism 3, so as to ensure normal operation of the control rod drive mechanism 3. The reactor head structure 1 is disposed above a reactor pressure vessel head 2 and is configured to be integrally lifted together with the reactor pressure vessel head 2 and the control rod drive mechanism 3 during reactor refueling and maintenance.

The reactor head structure 1 comprises a support assembly 10, a seismic support ring 30, a seismic plate 40, a flow-guiding baffle 50, a cable support and cable bridge assembly 60, and an upper lifting device 70. The support assembly 10 comprises a plurality of spaced-apart support rods 11. One end of each support rod 11 is fixed to the seismic support ring 30, and the other end thereof is connected to the reactor pressure vessel head 2. The seismic plate 40 is plate-shaped and is mounted within the seismic support ring 30. The flow-guiding baffle 50 is disposed on the seismic plate 40 and is configured to disperse high-temperature air at a central portion of the reactor head, thereby preventing the high-temperature air from directly contacting cables at the central portion of the reactor head and causing localized high temperatures that may impair the performance of the cables. The cable support and cable bridge assembly 60 is mounted above the flow-guiding baffle 50 and is configured to route all rod control and rod position system cables 4, core monitoring system cables, and loose parts and vibration monitoring system cables in the reactor head region to designated civil engineering interfaces. The upper lifting device 70 is connected to the cable support and cable bridge assembly 60 and is configured to lift and transport the reactor head structure 1 during reactor refueling and maintenance.

The plurality of support rods 11 of the support assembly 10 are each elongated and arranged at intervals. Two ends of each support rod 11 are respectively connected to the seismic support ring 30 and the reactor pressure vessel head 2 for providing seismic support. During lifting, the support rods 11 also function as lower lifting rods, thereby enabling integral lifting. The support assembly 10 further comprises a plurality of connecting members, two ends of each connecting member being respectively fixed to any two adjacent support rods 11 so as to improve the supporting strength of the support assembly 10. The structure of the support assembly 10 not only provides an installation space for the control rod drive mechanism 3, but also provides sufficient rigidity for the reactor pressure vessel head 2 and the control rod drive mechanism 3 under seismic conditions, thereby preventing excessive deformation of the control rod drive mechanism 3 and maintaining normal operation thereof. In addition, the structure of the support assembly 10 allows natural cooling and ventilation in the reactor head region, thereby preventing excessively high localized temperatures from accumulating in the reactor head region.

In some embodiments, each support rod 11 is vertically disposed between the seismic support ring 30 and the reactor pressure vessel head 2. The connecting members comprise first connecting members 12 and second connecting members 13. The first connecting members 12 are horizontally arranged, and the second connecting members 13 are obliquely arranged so as to prevent failure of the structure when subjected to lateral oscillation under seismic conditions, thereby further improving the stability of the reactor head structure 1. At least one first connecting member 12 and at least one second connecting member 13 are disposed between any two adjacent support rods 11, and two ends of each first connecting member 12 and each second connecting member 13 are respectively connected to the two adjacent support rods 11.

Specifically, a plurality of first connecting members 12 and a plurality of second connecting members 13 may be disposed between any two adjacent support rods 11, and the first connecting members 12 and the second connecting members 13 between any two adjacent support rods 11 are arranged alternately.

In the present embodiment, the support rods 11 are uniformly spaced apart along a circumferential direction of the seismic support ring 30, such that a plurality of first connecting members 12 and second connecting members 13 are connected to both sides of each support rod 11. Each vertically adjacent first connecting member 12 and second connecting member 13, together with the corresponding support rod 11, define a right triangle.

It should be understood that the term "adjacent" used herein means that the first connecting member 12 and the second connecting member 13 between two adjacent support rods 11 are vertically adjacent to each other.

In some embodiments, the support rods 11 may be formed from square steel bars or round steel bars. The number of the support rods 11 is preferably 6 to 10. A side length of each support rod 11 formed from a square steel bar, or a diameter of each support rod 11 formed from a round steel bar, is preferably 30 mm to 200 mm.

In some embodiments, preferably 5 to 10 first connecting members 12 and 5 to 10 second connecting members 13 are disposed between any two adjacent support rods 11. The first connecting members 12 and/or the second connecting members 13 may be formed from angle steel or flat steel plates, and preferably have a width of 30 mm to 150 mm.

In some embodiments, the support assembly 10 may alternatively be replaced with a tie-rod structure.

In some embodiments, the reactor head structure 1 further comprises a base 20 configured to increase the seismic supporting strength of the reactor head structure 1. Specifically, the base 20 comprises a base body 21. The base body 21 is in the form of a flange ring, and an upper end portion and a lower end portion thereof each project radially outward along a circumferential direction. A lower end portion of each support rod 11 is fixed to an upper end surface of the base body 21. Such an arrangement can effectively increase seismic supporting rigidity, lower the center of gravity of the reactor head structure 1, reduce the load moment, and prevent the overall weight of the reactor head structure 1 from becoming excessively large.

In some embodiments, the base 20 further comprises at least one support member 22, and the base body 21 is fixed to the reactor pressure vessel head 2 by means of the support member 22.

In the present embodiment, a plurality of support members 22 may be provided, preferably 4 to 10. The plurality of support members 22 are spaced apart along a circumference of the lower end portion of the base body 21 and are each connected to the reactor pressure vessel head 2.

In the present embodiment, each support member 22 has a skirt support structure, and the plurality of support members 22 are uniformly spaced apart along a circumference of the lower end portion of the base body 21.

In some embodiments, an axial height of the base body 21 is preferably 200 mm to 2,000 mm.

It should be understood that a total height of the support rods 11 and the base 20 is adapted to the height of the control rod drive mechanism 3, and the respective heights of the base 20 and the support rods 11 may be flexibly adjusted.

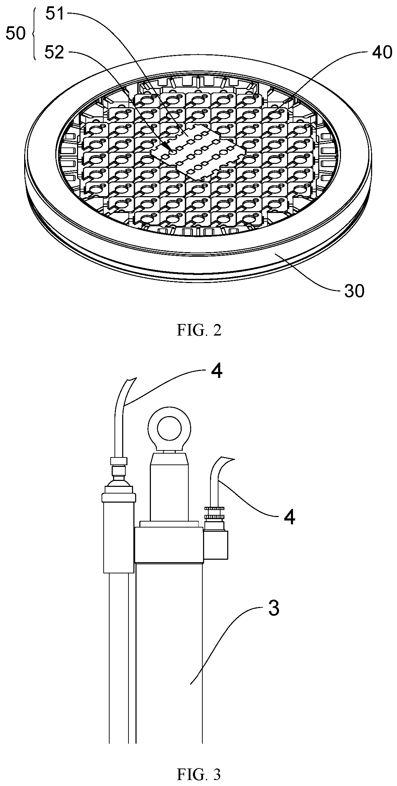

Referring also to FIG. 2, in the present embodiment, the seismic support ring 30 is annular, and the seismic plate 40 is in the form of a circular plate. An outer diameter of the seismic plate 40 is adapted to an inner diameter of the seismic support ring 30, and the seismic plate 40 is fixed within the seismic support ring 30. A plurality of accommodating openings extend through the seismic plate 40 in a thickness direction thereof to allow the control rod drive mechanisms 3 to extend therethrough.

It should be understood that the seismic support ring 30 and the seismic plate 40 are not limited to a circular shape, and may alternatively be square, polygonal, or of any other shape. The seismic support ring 30 may have a solid structure or, alternatively, a hollow box-like structure.

The seismic support ring 30, the seismic plate 40, the support assembly 10, and the base 20 together form a drum-and-grid support structure, which provides a plurality of beneficial effects, including but not limited to the following. First, the support structure enables an integrated design of the reactor head. During lifting and lowering-back operations, integral lifting and lowering-back of the reactor head structure 1 can be achieved merely by lifting the upper lifting device 70, thereby avoiding the installation of multiple lifting structures. Accordingly, time on the critical path of a refueling outage is not occupied, operation is simplified, the radiation dose received by operators is reduced, and the difficulty of in-service inspection, maintenance, and replacement is reduced. Second, an overall seismic design is achieved with a relatively lightweight structure. While reducing the weight of the reactor head, the seismic margin is increased. The support structure can not only support the reactor head, but also provide sufficient rigidity for the reactor head and the control rod drive mechanism 3 under seismic conditions, thereby limiting excessive deformation of the control rod drive mechanism 3 so as to maintain normal operation thereof and ensure functional integrity thereof under seismic conditions. Third, the integrated support structure makes it feasible for the reactor head structure 1 to be modularized, including being assembled outside the nuclear island and integrally lifted.

In some embodiments, the flow-guiding baffle 50 is disposed at a central portion of the seismic plate 40 and is configured to block high-temperature air generated by the control rod drive mechanism 3 and concentrated at the central portion of the reactor head, thereby preventing the high-temperature air at the central portion of the reactor head from directly contacting cables located at the central portion of the reactor head and causing excessively high localized temperatures that may damage the cables. At the same time, the flow-guiding baffle 50 may guide the high-temperature air rising toward the central portion of the reactor head to a sub-central region, such that the high-temperature air originally concentrated and rising at the central portion is dispersed circumferentially outward. In this way, a flow path of the high-temperature air is lengthened and a dispersion area thereof is enlarged, thereby avoiding localized high temperatures and, consequently, preventing cables routed at a central portion within the cable support and cable bridge assembly 60 from being damaged by the high-temperature air.

It should be understood that the high-temperature coils within the control rod drive mechanisms 3 dissipate a large amount of heat, causing the control rod drive mechanisms 3 located within the support assembly 10 to produce a heat-island effect. A large amount of high-temperature air converges toward a central portion, namely an axial centerline region, and diffuses upward, thereby forming a localized high-temperature region. Since a clearance is present between each accommodating opening in the seismic plate 40 and the corresponding control rod drive mechanism 3, the high-temperature air continues to rise through the accommodating openings and affects cables routed at a central portion within the cable support and cable bridge assembly 60 located above the seismic plate 40, potentially causing damage to the cables.

Accordingly, the "central portion" described above refers to a region within a relatively small area centered on a central axis of the control rod drive mechanisms 3 (In the present embodiment, the central axis is also the central axis of the reactor head structure 1, the seismic plate 40, and the seismic support ring 30). In the present embodiment, the central portion corresponds to a region covered by the flow-guiding baffle 50. Correspondingly, the "sub-central region" described above refers to the remaining region other than the central portion.

In some embodiments, the flow-guiding baffle 50 may be circular, rectangular, polygonal, or of another irregular shape. A side length of the flow-guiding baffle 50, when the flow-guiding baffle 50 is rectangular, or a diameter thereof, when the flow-guiding baffle 50 is circular, is preferably 200 mm to 2,000 mm.

In some embodiments, the flow-guiding baffle 50 and the seismic plate 40 may be disposed in contact with each other or may be spaced apart from each other, and a distance therebetween is preferably 0 mm to 400 mm. The reactor head structure 1 further comprises a plurality of connecting members (not shown in the drawings) configured to fix the flow-guiding baffle 50 to an upper surface of the seismic plate 40. In some embodiments, the connecting members may be adjustable connecting members, such that the distance between the seismic plate 40 and the flow-guiding baffle 50 is adjustable. In the present embodiment, the connecting members are adjustment bolts.

It should be understood that the connecting members may alternatively have other structures for providing fixation. A locally raised structure may be provided between the flow-guiding baffle 50 and the seismic plate 40 to control the spacing therebetween.

In some embodiments, the flow-guiding baffle 50 preferably has a thickness of 5 mm to 50 mm.

In some embodiments, a plurality of clearance openings 52 are further formed through the flow-guiding baffle 50 in a thickness direction thereof and are configured to accommodate upper end portions of the control rod drive mechanisms 3. The shapes and positions of the clearance openings 52 are adapted to the control rod drive mechanisms 3 so as to prevent, as far as possible, the high-temperature airflow from passing through the clearance openings 52 and reaching the cable support and cable bridge assembly 60 located above the flow-guiding baffle 50.

It should be understood that, when the elevation of the upper end portions of the control rod drive mechanisms 3 is lower than the elevation at which the flow-guiding baffle 50 is disposed, the clearance openings 52 may be omitted from the flow-guiding baffle 50.

In some embodiments, the flow-guiding baffle 50 is formed by joining at least two base plate segments 51. At least one clearance recess is formed at an edge of each base plate segment 51, and corresponding clearance recesses in two adjacent base plate segments 51 are joined to form a clearance opening 52. Such a configuration facilitates assembly and disassembly of the reactor head structure 1 and also facilitates removal and installation of components of the control rod drive mechanisms 3 when replacement thereof is required.

In the present embodiment, the flow-guiding baffle 50 is made of a metal material, is arranged coaxially with the seismic plate 40, and has an overall rectangular shape. The flow-guiding baffle 50 is formed by joining four base plate segments 51. A plurality of clearance recesses are provided in each base plate segment 51, and corresponding clearance recesses are respectively joined to form a plurality of clearance openings 52.

The provision of the flow-guiding baffle 50 provides a plurality of beneficial effects, including but not limited to the following. First, the reactor head structure 1 does not need to be provided with a forced ventilation cooling system, while the overall operating performance of the control rod drive mechanisms 3 can still be ensured. This reduces the probability of coil components being burnt out and the probability of an unplanned reactor shutdown caused by failure of a cooling and ventilation device, thereby improving the operational reliability and economic efficiency of the nuclear power plant. Natural ventilation and cooling can be provided under operating conditions such as normal reactor operation and reactor shutdown for refueling. Second, omission of the forced ventilation cooling system reduces the overall weight and lowers the center of gravity of the reactor head structure 1, while also facilitating cable routing on the reactor head. In addition, ventilation-related structures do not need to be removed during reactor shutdown for refueling, thereby shortening the refueling outage period. Third, the flow-guiding baffle 50 cooperates with the support structure integrally formed by the seismic support ring 30, the seismic plate 40, the support assembly 10, and the base 20, such that the high-temperature air blocked by the flow-guiding baffle 50 remains below the flow-guiding baffle 50 and can be dispersed and cooled by natural ventilation, thereby further improving the heat dissipation performance of the reactor head structure 1.

In some embodiments, the cable support and cable bridge assembly 60, the upper lifting device 70, the seismic support ring 30, and the seismic plate 40 may each employ existing technologies to perform the functions described above.

It should be understood that the term "fixed" as used above may refer to fixation by welding, fixation by fasteners, such as bolted connection or riveting, or fixation by an integral forming process, without any particular limitation herein.

It should be understood that all of the numerical ranges described above are inclusive of their respective endpoints.

As further shown in FIG. 1, the present application further provides a reactor head system. The reactor head system is disposed on the reactor pressure vessel head 2 and comprises any one of the reactor head structures 1 described above and control rod drive mechanisms 3, wherein the control rod drive mechanisms 3 extend through the reactor head structure 1.

Referring also to FIG. 3, in some embodiments, the control rod drive mechanisms 3 may be made of high-temperature-resistant materials so as to improve the operating performance thereof and prevent them from being burnt out by high-temperature air.

In some embodiments, at least some of the cables of the reactor head structure 1 and routed within the cable support and cable bridge assembly 60 are also made of high-temperature-resistant materials so as to improve the performance of the cables and prevent the cables from being burnt out by high-temperature air.

Specifically, in the present embodiment, the rod control and rod position system cables 4 routed within the cable support and cable bridge assembly 60 are made of high-temperature-resistant materials.

It should be understood that the foregoing embodiments merely illustrate preferred implementations of the present application. Although the foregoing descriptions are relatively specific and detailed, they should not therefore be construed as limiting the patent scope of the present application. It should be noted that a person of ordinary skill in the art may freely combine the foregoing technical features and may make various modifications and improvements without departing from the concept of the present application, all of which fall within the scope of protection of the present application. Accordingly, all equivalent variations and modifications made within the scope of the claims of the present application shall fall within the scope encompassed by the claims of the present application.

## Claims

1. A reactor head structure, comprising a seismic support ring (30) and a seismic plate (40), wherein the seismic plate (40) is mounted within the seismic support ring (30), **characterized in that** the reactor head structure further comprises:
a support assembly (10) comprising a plurality of spaced-apart support rods (11), one end of each of the support rods (11) being fixed to the seismic support ring (30); and
a flow-guiding baffle (50) configured to disperse high-temperature air at a central portion of the reactor head, the flow-guiding baffle (50) being disposed on the seismic plate (40).

2. The reactor head structure according to claim 1, **characterized in that** the support assembly (10) further comprises a plurality of connecting members, two ends of each of the connecting members being respectively fixed to any two adjacent support rods (11).

3. The reactor head structure according to claim 2, **characterized in that** the connecting members comprise a plurality of horizontally arranged first connecting members (12) and a plurality of obliquely arranged second connecting members (13), the support rods (11) are each vertically arranged, a plurality of the first connecting members (12) and a plurality of the second connecting members (13) are spaced apart between any two adjacent support rods (11), and the first connecting members (12) and the second connecting members (13) between any two adjacent support rods (11) are arranged in a crossed manner.

4. The reactor head structure according to claim 2, **characterized in that** the support rods (11) are uniformly spaced apart along a circumferential direction of the seismic support ring (30), the first connecting members (12) and the second connecting members (13) are each rod-shaped, and each adjacent first connecting member (12) and second connecting member (13), together with the support rod (11), define a right triangle.

5. The reactor head structure according to claim 1, **characterized in that** the reactor head structure further comprises a base (20), and the other end of each of the support rods (11) is fixed to the base (20).

6. The reactor head structure according to claim 5, **characterized in that** the base (20) comprises a base body (21), the base body (21) being in the form of a flange ring, and an upper end portion and a lower end portion thereof each projecting radially outward along a circumferential direction.

7. The reactor head structure according to claim 1, **characterized in that** the flow-guiding baffle (50) is arranged coaxially with the seismic plate (40).

8. The reactor head structure according to claim 1, **characterized in that** a distance between the flow-guiding baffle (50) and the seismic plate (40) is 0-400 mm.

9. The reactor head structure according to claim 1, **characterized in that** a side length or diameter of the flow-guiding baffle (50) is 200-2000 mm.

10. The reactor head structure according to claim 1, **characterized in that** a plurality of clearance openings (52) for accommodating control rod drive mechanisms (3) are formed in the flow-guiding baffle (50).

11. The reactor head structure according to claim 10, **characterized in that** the flow-guiding baffle (50) is formed by joining at least two base plate segments (51), at least one clearance recess being formed at an edge of each of the base plate segments (51), and two corresponding clearance recesses being joined to form one of the clearance openings (52).

12. The reactor head structure according to claim 1, **characterized in that** the reactor head structure further comprises a cable support and cable bridge assembly (60) and an upper lifting device (70), the cable support and cable bridge assembly (60) being mounted above the flow-guiding baffle (50), and the upper lifting device (70) being connected to the cable support and cable bridge assembly (60).

13. A reactor head system disposed on a reactor pressure vessel head (2), **characterized in that** the reactor head system comprises the reactor head structure according to any one of claims 1 to 12 and a control rod drive mechanism (3).

14. The reactor head system according to claim 13, **characterized in that** the other end of each of the support rods (11) is connected to the reactor pressure vessel head (2), and the control rod drive mechanism (3) extends through the reactor head structure (1).

15. The reactor head system according to claim 14, **characterized in that** the reactor head structure (1) further comprises a base (20), the other end of each of the support rods (11) being fixed to the base (20), and the base (20) being mounted on the reactor pressure vessel head (2) by means of at least one support member (22).

16. The reactor head system according to claim 13, **characterized in that** the control rod drive mechanism (3) and at least some of the cables routed in the reactor head system are made of high-temperature-resistant materials.
